# FASCICULE DE BREVET EUROPEEN

(11) **EP 3 608 833 B1**
(45) Date de publication et mention de la délivrance du brevet: **13.12.2023**
(21) Numéro de dépôt: 19188933.6
(22) Date de dépôt: 29.07.2019
(51) Int. Cl.: G06Q 20/34, G07F 7/08, G06V 40/13, G06Q 20/40

(54) **ACQUISITION D'UNE EMPREINTE BIOMÉTRIQUE À PARTIR D'UNE CARTE À PUCE**
ERFASSUNG EINES BIOMETRISCHEN ABDRUCKS VON EINER CHIPKARTE
ACQUISITION OF A BIOMETRIC FINGERPRINT FROM A SMART CARD

(30) Priorité: 07.08.2018 FR 1857353
(43) Date de publication de la demande: 12.02.2020
(73) Titulaire: Idemia Identity & Security France, 92130 Issy-les-Moulineaux (FR)
(72) Inventeur: PRAWITZ, Nicolas, 95520 Osny (FR); LATRILLE, Olivier, 95520 Osny (FR); LUCAS, David, 95520 Osny (FR); DOUCHE, Sébastien, 95520 Osny (FR)
(74) Mandataire: Idemia

(56) Documents cités:
- EP-A2- 1 265 121
- WO-A1-2010/022129
- WO-A2-2004/025545
- US-A1- 2007 040 017
- US-A1- 2012 318 863
- US-A1- 2016 203 346

## Description

### Arrière-plan de l'invention

La présente invention se situe dans le domaine général des dispositifs électroniques et concerne plus particulièrement l'acquisition d'une empreinte biométrique en utilisant une carte à puce. L'invention vise notamment à permettre l'authentification d'un utilisateur à partir d'une empreinte biométrique capturée par un lecteur d'empreintes biométriques dont est dotée une carte à puce.

L'utilisation des cartes à puce (ou cartes à microcircuit) est aujourd'hui largement répandue dans la vie quotidienne. De telles cartes sont par exemple utilisées comme cartes bancaires, cartes de fidélité, cartes d'accès etc., et peuvent prendre divers formats selon leurs utilisations respectives. Les cartes à puce peuvent être conçues pour réaliser divers types de fonctions, notamment pour effectuer des transactions, telles que des transactions bancaires (transaction de paiement, de transfert...), des transactions d'authentification, etc.

De façon connue, une carte à puce comprend généralement un corps de carte qui est équipé d'une puce électronique configurée pour traiter des signaux et réaliser diverses fonctions selon l'utilisation souhaitée de la carte. Une carte à puce est également munie de moyens de communication permettant à la puce électronique d'interagir avec l'extérieur, par exemple avec un terminal ou lecteur externe.

Traditionnellement, une carte à puce est conçue pour coopérer avec un terminal externe au travers de plages de contact accessibles à la surface de la carte. Un terminal externe peut ainsi positionner des broches de contact appropriées sur les plages de contact de la carte afin d'établir une communication par contact.

Plus récemment, les cartes à puce sans contact ont connu un essor croissant en raison du gain en rapidité et en simplicité lié aux transactions sans contact. Pour ce faire, les cartes sans contact embarquent une antenne radiofréquence (RF) permettant la transmission et la réception de signaux RF avec un terminal externe.

Un effort constant est réalisé dans l'industrie de la carte à puce pour sécuriser les transactions réalisées par leurs utilisateurs. EMV est par exemple le protocole standardisé utilisé aujourd'hui majoritairement dans le monde pour sécuriser notamment les transactions de paiement effectuées par des cartes à puce.

Une tendance actuelle consiste à sécuriser des transactions à l'aide d'empreintes biométriques des utilisateurs, et notamment au moyen de leurs empreintes digitales.

Il est déjà connu d'équiper une carte à puce avec un capteur d'empreintes digitales afin de permettre à son utilisateur de s'authentifier. L'acquisition d'empreintes digitales sur un tel lecteur embarqué dans la carte à puce présente cependant des difficultés techniques qu'il est nécessaire de surmonter afin de permettre l'essor de cette nouvelle technologie.

L'acquisition d'empreintes digitales sur une carte à puce peut paraître complexe ou fastidieuse pour certains utilisateurs, notamment pour ceux qui ne sont pas familiers avec ce type de technologie. Il est donc nécessaire de guider l'utilisateur au travers du processus d'acquisition de l'empreinte digitale.

Or, les cartes à puce actuelles ne disposent généralement pas de moyens internes pour communiquer directement avec les utilisateurs et ne sont donc pas en capacité de les guider dans le processus de capture de l'empreinte digitale.

En outre, l'intégration de composants toujours plus nombreux et complexes dans les cartes à puce pose problème, en particulier cela rend les cartes à puce plus fragiles et plus exposées aux défaillances. Les cartes à puce, telles que les cartes bancaires ou badges d'accès par exemple, doivent généralement présenter certaines caractéristiques minimales en termes notamment de résistance mécanique et de robustesse.

Un problème supplémentaire peut résulter de la nécessiter d'alimenter électriquement un capteur d'empreintes digitales embarqué dans une carte à puce, cette dernière étant généralement dépourvue de source d'alimentation interne.

Il existe donc aujourd'hui un besoin pour une solution simple et facile d'utilisation permettant l'acquisition d'empreintes biométriques (telles que des empreintes digitales par exemple) à l'aide d'une carte à puce et ce, sans compromettre en particulier la robustesse et les caractéristiques mécaniques de la carte à puce.

Il est en particulier souhaitable de guider les utilisateurs afin qu'ils puissent aisément réaliser une capture d'empreinte biométrique à l'aide d'une carte à puce sans que cela ne requière de modifications complexes des cartes à puce actuelles ni de connaissances approfondies de la part des utilisateurs.

Le document suivant est un document de l'art antérieur: WO 2010/022129 A1 (XCARD HOLDINGS LLC [US]; BONA JOHN KENNETH [US]; COX MARK ALLAN [US]) 25 février 2010 (2010-02-25).

Ce document divulgue un système comprenant une carte à puce et un dispositif périphérique configurés pour coopérer ensemble pour permettre l'acquisition d'une empreinte biométrique, la carte à puce 400 comprenant un capteur d'empreintes biométrique et un module de contrôle configuré pour transmettre au moins un signal de contrôle au dispositif périphérique. Le système périphérique 300 comprend un écran 302 comme interface utilisateur. A l'étape 604, l'écran 302 est utilisé pour guider l'utilisateur dans l'acquisition de l'empreinte biométrique en fonction de la qualité de l'image capturée.

L'invention est avantageuse en ce qu'elle offre une solution simple et facile d'utilisation pour l'acquisition d'empreintes biométriques à partir d'une carte à puce et ce, sans compromettre en particulier la robustesse et les caractéristiques mécaniques de la carte à puce. En effet, l'interface utilisateur est embarquée dans un dispositif périphérique qui peut avantageusement être couplé de façon sélective avec la carte à puce. La carte à puce peut être découplée du dispositif périphérique lorsque ce dernier n'est pas utile, préservant ainsi l'interface utilisateur d'éventuelles défaillances en cas de contraintes mécaniques (torsions, chocs, chutes...) appliquées à la carte à puce.

L'invention permet de guider les utilisateurs afin qu'ils puissent aisément réaliser une capture d'empreinte biométrique à partir de leur carte à puce sans que cela ne requière de modifications complexes des cartes à puce actuelles ni de connaissances approfondies de la part des utilisateurs.

### Objet et résumé de l'invention

A cet effet, la présente invention concerne un système comme défini dans la revendication 1.

Selon un mode de réalisation particulier, le dispositif périphérique ne comporte aucun moyen de traitement actif apte à interpréter une quelconque commande provenant de la carte à puce.

Selon un mode de réalisation particulier, la carte à puce comprend :
- une mémoire pour stocker ladite empreinte biométrique en tant qu'empreinte biométrique de référence, une fois celle-ci acquise par le capteur d'empreintes biométriques ; et
- un module d'authentification configuré pour authentifier ledit utilisateur à partir d'une comparaison de l'empreinte biométrique de référence et d'une autre empreinte biométrique acquise ultérieurement.

Selon un mode de réalisation particulier, la carte à puce comprend :
- une mémoire pour stocker ladite empreinte biométrique, une fois celle-ci acquise par le capteur d'empreintes biométriques ; et
- un module d'authentification configuré pour authentifier ledit utilisateur à partir d'une comparaison de l'empreinte biométrique acquise et de données d'empreinte préenregistrées en tant qu'empreinte biométrique de référence.

L'invention permet avantageusement d'authentifier un utilisateur en comparant une empreinte biométrique acquise avec d'autres données d'empreinte, et ce sans qu'il soit nécessaire de sortir ces données de la carte à puce. Les données représentatives des empreintes biométriques capturées en utilisant le capteur d'empreintes biométriques peuvent avantageusement être conservées de façon sécurisée dans une mémoire de la carte à puce.

Selon un mode de réalisation particulier, le dispositif périphérique comprend une batterie pour alimenter électriquement l'interface utilisateur.

Selon un mode de réalisation particulier, l'interface utilisateur est configurée pour :
- se mettre dans un premier état prédéterminé en réponse à un premier signal de contrôle reçu en provenance de la carte à puce, de sorte à indiquer le début d'une phase d'acquisition d'une empreinte biométrique par le capteur d'empreintes biométriques ;
- se mettre dans un deuxième état prédéterminé en réponse à un deuxième signal de contrôle reçu en provenance de la carte à puce, de sorte à indiquer qu'une empreinte biométrique est en cours d'acquisition ; et
- se mettre dans un troisième état prédéterminé en réponse à un troisième signal de contrôle reçu en provenance de la carte à puce, de sorte à indiquer que la phase d'acquisition de l'empreinte biométrique est terminée,
dans lequel les premier, deuxième et troisième signaux de contrôle sont distincts les uns des autres.

Selon un mode de réalisation particulier, l'interface utilisateur est configurée pour :
- commuter entre deux états prédéterminés à une première fréquence en réponse à une série de premiers signaux de contrôle reçus en provenance de la carte à puce, de sorte à indiquer le début d'une phase d'acquisition d'une empreinte biométrique par le capteur d'empreintes biométriques ;
- commuter entre deux états prédéterminés à une deuxième fréquence en réponse à une série de deuxièmes signaux de contrôle reçus en provenance de la carte à puce, de sorte à indiquer qu'une empreinte biométrique est en cours d'acquisition ; et
- se mettre dans un troisième état prédéterminé en réponse à un troisième signal de contrôle reçu en provenance de la carte à puce, de sorte à indiquer que la phase d'acquisition de l'empreinte biométrique est terminée,
dans lequel les première et deuxième fréquences sont distinctes l'une de l'autre, et le troisième signal est distinct des premier et deuxième signaux.

Selon un exemple particulier, les premiers et deuxièmes signaux de contrôle sont identiques (même niveau unique d'une caractéristique électrique) et sont émis à des fréquences d'émission distinctes (autrement dit, la première fréquence et la deuxième fréquence sont différentes l'une de l'autre).

Selon un mode de réalisation particulier, l'interface utilisateur comprend une première LED et une deuxième LED distinctes l'une de l'autre,
le module de contrôle étant configuré pour transmettre au dispositif périphérique, en tant que signal de contrôle :
- une tension à la masse pour allumer uniquement la première LEDs parmi les deux LEDs ; et
- une tension à un niveau haut prédéterminé, supérieure à la masse, pour allumer uniquement la deuxième LEDs parmi les deux LEDs.

Selon un mode de réalisation particulier, la carte à puce est une carte comportant des contacts externes, conformes à la norme ISO 7816, pour transmettre par contact chaque signal de contrôle au dispositif périphérique.

Selon un mode de réalisation particulier, la carte à puce est configurée pour transmettre chaque signal de contrôle via le contact externe C4, C6 ou C8 au sens de la norme ISO 7816.

Selon un mode de réalisation particulier, la carte à puce est configurée pour transmettre chaque signal de contrôle via un contact parmi les contacts externes C2, C3 et C7 au sens de la norme ISO 7816,
dans lequel la carte à puce est configurée pour commuter entre:
   - un premier mode de fonctionnement dans lequel la carte à puce utilise ledit un contact parmi les contacts externes C2, C3 et C7 au sens de la norme ISO 7816 pour réaliser une communication de type ISO 7816 avec un terminal externe ; et
   - un deuxième mode de fonctionnement dans lequel la carte à puce utilise ledit un contact parmi les contacts externes C2, C3 et C7 au sens de la norme ISO 7816 pour transmettre chaque signal de contrôle au dispositif périphérique ;
la carte à puce comprenant :
   - un module de vérification configuré pour vérifier, au démarrage de la carte à puce, au moins un niveau de signal parmi le signal RST détecté sur le contact externe C2 au sens de la norme ISO 7816, le signal CLK détecté sur le contact externe C3 au sens de la norme ISO 7816 et le signal d'alimentation VCC détecté sur le contact externe C1 au sens de la norme ISO 7816; et
   - un module de configuration configuré pour commuter la carte à puce, soit dans le premier mode de fonctionnement soit dans le deuxième mode de fonctionnement, en fonction dudit au moins un niveau de signal détecté parmi le signal RST, le signal CLK et le signal VCC.

Selon un mode de réalisation particulier, la carte à puce est une carte de paiement.

Selon un mode de réalisation particulier, le dispositif périphérique est un étui dans lequel la carte à puce s'insère pour permettre la transmission dudit au moins un signal de contrôle depuis le module de contrôle vers le dispositif périphérique.

Selon un mode de réalisation, l'invention est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit dans ce document pour le module concerné.

De la même manière, un composant matériel correspond à tout élément d'un ensemble matériel (ou hardware) apte à mettre en oeuvre une fonction ou un ensemble de fonctions, selon ce qui est décrit dans ce document pour le module concerné. Il peut s'agir d'un composant matériel programmable ou avec processeur intégré pour l'exécution de logiciel, par exemple un circuit intégré.

L'invention concerne également un procédé de contrôle correspondant mis en oeuvre par un système tel que défini ci-avant.

Plus particulièrement, l'invention vise un procédé de contrôle comme défini dans la revendication 13.

A noter que les différents modes de réalisation définis ci-avant en relation avec le système de l'invention ainsi que les avantages associés s'appliquent de façon analogue au procédé de contrôle de l'invention. Pour chaque étape du procédé de contrôle, le système de l'invention peut comprendre un module correspondant configuré pour réaliser ladite étape.

Dans un mode particulier de réalisation, les différentes étapes du procédé de contrôle mis en oeuvre par la carte à puce sont déterminées par des instructions de programmes d'ordinateurs.

En conséquence, la description vise aussi un programme d'ordinateur sur un support d'informations (ou support d'enregistrement), ce programme étant susceptible d'être mis en oeuvre dans une carte à puce, ce programme comportant des instructions adaptées à la mise en oeuvre des étapes d'un procédé de contrôle tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La description vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente schématiquement un système comprenant une carte à puce et un dispositif périphérique, conformément à un mode de réalisation de l'invention ;
- la figure 2 est une vue générale en perspective représentant un système tel qu'illustré en figure 1, conformément à un mode de réalisation de l'invention ;
- la figure 3 représente schématiquement les modules fonctionnels mis en oeuvre par une carte à puce appartenant à un système de l'invention, selon un mode de réalisation particulier ;
- la figure 4 représente, sous forme d'un diagramme, les étapes d'un procédé de contrôle mis en oeuvre par un système de l'invention, conformément à un mode de réalisation particulier ;
- la figure 5 représente une interface de communication par contact d'une carte à puce appartenant à un système de l'invention, conformément à un mode de réalisation particulier ;
- la figure 6 représente schématiquement, sous forme d'un diagramme, les étapes d'un procédé de contrôle mis en oeuvre par une carte à puce appartenant à un système de l'invention, conformément à un mode de réalisation particulier ;
- la figure 7 est un schéma électrique représentant schématiquement un circuit mis en oeuvre dans le système de l'invention, selon un mode de réalisation particulier ; et
- la figure 8 représente schématiquement une configuration des signaux de contrôle selon un mode de réalisation particulier.

### Description détaillée de plusieurs modes de réalisation

L'invention s'applique de manière générale à l'acquisition d'empreintes biométriques à partir d'une carte à puce (ou carte à microcircuit) dans laquelle est embarqué un capteur d'empreintes biométriques. Cette phase d'acquisition, pouvant être réalisée à différents stades comme expliqué ci-après, peut permettre en particulier à un utilisateur de s'authentifier à partir de son empreinte biométrique.

Dans ce document, des exemples de mise en oeuvre de l'invention sont décrits dans le cadre des cartes à puce conformes à la norme ISO 7816, d'autres implémentations étant toutefois possibles pour des cartes à puce non conformes à ISO 7816.

De plus, les exemples de mise en oeuvre décrits ci-dessous s'appliquent plus particulièrement au cas de l'acquisition d'empreintes digitales. Comme indiqué par la suite, l'invention peut s'appliquer à d'autres types d'empreintes biométriques.

L'invention vise notamment l'acquisition d'empreintes biométriques à partir d'une carte à puce EMV (pour « *Europay Mastercard Visa* »), c'est-à-dire configurée pour traiter des transactions selon le protocole EMV. D'autres mises en oeuvre de l'invention sont toutefois possibles sans adopter le protocole EMV.

L'invention s'applique notamment aux cartes à puce telles que les cartes bancaires ou cartes de paiement, mais également à tous autres types appropriés tels les cartes d'accès, cartes d'authentification ou cartes de fidélité, par exemple.

L'invention se propose de guider de manière simple et efficace l'utilisateur lors d'une phase d'acquisition (ou phase de capture) d'une ou plusieurs empreintes biométriques en utilisant un capteur d'empreintes biométriques embarqué dans une carte à puce. Pour ce faire, l'invention, selon différents modes de réalisation, met en oeuvre un système comprenant une carte à puce et un dispositif périphérique, ces deux éléments étant séparés l'un de l'autre et étant configurés pour se coupler l'un avec l'autre afin de permettre l'acquisition d'une ou plusieurs empreintes biométriques tout en guidant efficacement l'utilisateur lors du processus de capture d'empreinte.

A cette fin, la carte à puce embarque un capteur d'empreintes biométriques tandis que le dispositif périphérique embarque une interface utilisateur configurée pour être pilotée à distance par la carte à puce. Lorsque ces deux éléments sont couplés, la carte à puce est configurée pour transmettre des signaux de contrôle au dispositif périphérique afin que l'interface utilisateur de ce dernier présente à l'utilisateur des informations utiles relatives à la capture d'une ou plusieurs empreintes biométriques sur la carte à puce.

Le dispositif périphérique ne comporte, mis à part au moins une éventuelle source d'alimentation interne, uniquement des composants passifs, parmi lesquels l'interface utilisateur, de sorte que les signaux de contrôle émis depuis la carte à puce contrôlent directement l'état dans lequel se trouve l'interface utilisateur à un instant donné.

Le caractère amovible de la carte à puce vis-à-vis du dispositif périphérique présente l'avantage que le couplage entre ces deux éléments peut n'être réalisé que lors d'une phase d'acquisition d'une ou plusieurs empreintes biométriques. Le dispositif périphérique peut être découplé de la carte à puce, afin que cette dernière puisse être utilisée dans d'autres applications, telles que par exemple pour réaliser une transaction ou communication (de type ISO 7816 par exemple) avec un terminal externe.

En déportant ainsi l'interface utilisateur dans un dispositif périphérique amovible, il est possible de s'assurer que la carte à puce conserve de bonnes propriétés mécaniques en termes notamment de robustesse et résistances aux contraintes mécaniques (torsions, chutes...).

Comme décrit par la suite, la ou les empreintes biométriques acquises dans le cadre de l'invention peuvent avoir plusieurs utilisations possibles. Lors d'une phase d'acquisition initiale (dite « phase d'enrôlement »), il peut être nécessaire de capturer au moins une empreinte biométrique pour acquérir une empreinte biométrique de référence à laquelle est comparée par la suite une empreinte de l'utilisateur acquise ultérieurement pour authentifier ce dernier, par exemple dans le cadre d'une transaction en cours de traitement. En général, cette phase d'enrôlement n'est réalisée qu'une seule fois lors d'une configuration initiale (personnalisation) de la carte à puce.

Par ailleurs, lors d'une phase d'acquisition ultérieure à la phase d'enrôlement initiale, l'invention permet d'acquérir une empreinte biométrique qui peut être comparée à une empreinte biométrique préenregistrée dans la carte à puce en tant qu'empreinte de référence, afin d'authentifier un utilisateur.

D'autres aspects et avantages de la présente invention ressortiront des exemples de réalisation décrits ci-dessous en référence aux dessins mentionnés ci-avant.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

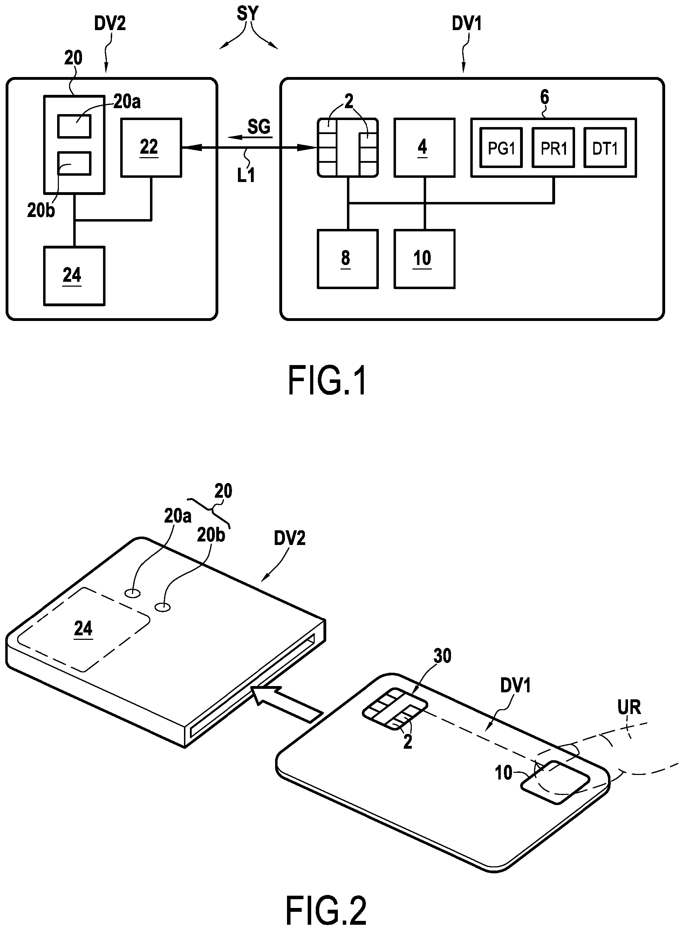

Les **figures 1** et **2** représentent, de manière schématique, la structure d'un système SY comprenant : une carte à puce DV1 et un dispositif périphérique DV2, ces deux éléments étant distincts (séparés) l'un de l'autre et configurés pour coopérer ensemble, c'est-à-dire pour se coupler l'un avec l'autre, afin de permettre l'acquisition d'une empreinte biométrique (dans cet exemple une empreinte digitale).

Le couplage et le découplage de la carte à puce DV1 avec le dispositif périphérique DV2 peuvent être réalisés sélectivement, c'est-à-dire à la demande. Le dispositif périphérique DV2 peut être couplé de façon amovible à la carte à puce DV1 lorsqu'un utilisateur souhaite procéder à la capture d'une empreinte digitale.

Le couplage entre la carte à puce DV1 et le dispositif périphérique DV2 peut être réalisé de diverse manières, et notamment par contact ou sans contact selon le cas. Ce couplage se traduit dans le cas présent par l'établissement d'une liaison de communication L1 entre la carte à puce DV1 et le dispositif périphérique DV2, cette liaison étant une liaison par contact dans les exemples représentés en **figures 1** et **2****.**

Le dispositif périphérique DV2 peut se présenter sous diverses formes. La **figure 2** représente un exemple de réalisation non limitatif dans lequel le dispositif périphérique DV2 prend la forme d'un étui dans lequel la carte à puce DV1 vient s'insérer pour réaliser un couplage par contact. Pour ce faire, l'étui comporte une cavité configurée pour accueillir la carte à puce de sorte que, une fois insérée, la carte à puce puisse piloter l'interface utilisateur de l'étui (comme décrit ci-après).

D'autres formes de couplage, par contact ou sans contact, sont toutefois possibles.

Comme représenté en **figures 1** et **2****,** la carte à puce DV1 comprend dans l'exemple envisagé ici des contacts externes 2, un processeur 4, une mémoire non volatile 6, une mémoire volatile (RAM) 8 et un capteur (ou lecteur) 10 d'empreintes digitales.

La carte à puce DV1 est, dans cet exemple, conforme à la norme ISO 7816 bien que d'autres exemples soient possibles. La carte à puce DV1 est par exemple une carte de paiement (ou carte bancaire), de type EMV ou autre.

Les contacts externes (ou plages de contact) 2, conformes dans cet exemple à la norme ISO 7816, constituent une interface de communication permettant à la carte à puce DV1, et plus particulièrement au processeur 4, de transmettre par contact des signaux de contrôle SG au dispositif périphérique DV2, afin de piloter à distance l'interface utilisateur 20 de ce dernier.

Comme décrit par la suite, au moins un contact externe (C1 à C8) au sens de la norme ISO 7816-2 peut être utilisé par la carte à puce DV1 pour transmettre le ou les signaux de contrôle SG au dispositif périphérique DV2. De cette manière, la carte à puce DV1 peut avantageusement piloter le dispositif périphérique DV2 sans que cela ne nécessite des modifications structurelles au niveau de la carte à puce DV1.

Comme déjà indiqué, la carte à puce DV1 peut alternativement coopérer en sans contact avec le dispositif périphérique DV2, par exemple via une liaison NFC. Pour ce faire, la carte à puce DV1 peut comprendre une antenne radiofréquence (RF), non représentée sur les figures.

La mémoire 6 est une mémoire non volatile réinscriptible (de type Flash par exemple), cette mémoire constituant un support d'enregistrement (ou support d'informations) conforme à un mode de réalisation particulier, lisible par la carte à puce DV1, et sur lequel est enregistré un programme d'ordinateur PG1 conforme à un mode de réalisation particulier. Ce programme d'ordinateur PG1 comporte des instructions pour l'exécution des étapes d'un procédé de contrôle, ces étapes étant exécutées par le processeur 4 de la carte à puce DV1.

La mémoire non volatile 6 est en outre apte à stocker une empreinte digitale PR1 acquise ou détectée par le capteur 10 d'empreintes digitales et également pour stocker des données d'empreinte DT1 qui représentent une empreinte de référence à laquelle est comparée l'empreinte PR1 pour authentifier un utilisateur UR (**figure 2**).

Comme déjà indiqué, le capteur 10 est configuré pour faire une acquisition (capture) d'une empreinte digitale. Pour ce faire, ce capteur 10 est accessible depuis la surface de la carte à puce DV1 de sorte qu'un utilisateur puisse y apposer son doigt et ainsi procéder à une capture d'empreinte digitale.

On entend dans ce document par capture (ou acquisition) d'une empreinte digitale, l'acquisition de données biométriques représentatives d'une empreinte digitale. Plus généralement, on entend par capture (ou acquisition) d'une empreinte biométrique, l'acquisition de données biométriques représentative de cette empreinte.

Dans l'exemple représenté en **figure 2****,** la carte à puce DV1 comprend un module électronique 30 qui comporte les contacts externes 2 accessibles à la surface de la carte à puce DV1 et qui comprend en outre une puce électronique (non représentée) dans lequel se trouve le processeur 4 (**figure 1**). Le processeur 4 pilote le capteur 10 d'empreintes digitales au travers d'une liaison de communication (bus) approprié.

On notera que la carte à puce DV1 est dépourvue d'interface utilisateur de sorte qu'elle ne dispose pas de moyen apte à guider un utilisateur UR lors d'une phase d'acquisition d'une empreinte digitale.

Par ailleurs, comme représenté en **figures 1** et **2****,** le dispositif périphérique DV2 comprend dans cet exemple une interface utilisateur 20, une interface de communication 22 et, éventuellement, une source d'alimentation interne (ou batterie) 24.

Le dispositif périphérique DV2 comprend, mis à part au moins une éventuelle source d'alimentation interne (une batterie par exemple), uniquement des composants passifs, parmi lesquels l'interface utilisateur 20 précitée. Comme bien connu de l'homme du métier, un composant est dit « passif » lorsqu'il ne permet pas d'augmenter la puissance d'un signal. Un composant passif peut être, par exemple, une résistance, un condensateur, une bobine, une diode (par exemple une diode électroluminescente également connu sous l'abréviation anglo-saxonne LED), etc., ainsi que tout assemblage de ces composants passifs.

Autrement dit, dans un exemple particulier, le dispositif périphérique DV2 ne comprend pas de source d'alimentation interne et donc comporte uniquement des composants passifs, parmi lesquels l'interface utilisateur 20.

Selon un autre exemple, le dispositif périphérique DV2 comprend au moins une source d'alimentation interne (une batterie par exemple). Dans ce cas, mis à part ce ou ces sources d'alimentation internes, le dispositif périphérique DV2 comprend uniquement des composants passifs, parmi lesquels l'interface utilisateur 20.

Il s'ensuit que le dispositif périphérique DV2 ne comprend pas de composant dit « actif » (c'est-à-dire capable d'augmenter la puissance d'un signal) autre qu'une ou des éventuelles sources d'alimentation internes. En particulier, le dispositif périphérique DV2 ne comporte aucun moyen de traitement actif apte à interpréter (au sens logiciel) une quelconque commande provenant de la carte à puce.

Dans les exemples considérés ici, le dispositif périphérique DV2 ne comporte pas de processeur, ni de mémoire.

Comme indiqué par la suite, il est ainsi possible de fournir une interface utilisateur déportée vis-à-vis de la carte à puce DV1, et ce avec un minimum de complexité quant aux ressources nécessaires pour mettre en oeuvre le dispositif périphérique, et plus généralement le système selon le principe de l'invention.

L'interface utilisateur 20 permet de guider un utilisateur UR lors de la phase d'acquisition (ou de capture) d'une empreinte digitale par le capteur 10 de la carte à puce DV1. Pour ce faire, l'interface utilisateur est configurée pour présenter, sous toute forme appropriée, des informations utiles relatives à la capture d'une empreinte digitale par le capteur 10. L'utilisateur peut ainsi se repérer dans la phase d'acquisition d'une ou plusieurs empreintes digitales et déterminer aisément la marche à suivre.

Dans le contexte de l'invention, on entend par « interface utilisateur » tous moyens ou composants aptes à présenter à un utilisateur UR des informations relatives à la capture d'une ou plusieurs empreintes biométriques depuis le capteur 10. Les informations ainsi fournies peuvent être de nature visuelle, auditive, vibratoire ou sous tout autre forme appropriée.

L'interface utilisateur 20 peut comprendre par exemple au moins un voyant lumineux, à savoir deux voyant lumineux 20a et 20b dans le cas d'espèce représenté en **figures 1** et **2****.** Dans cet exemple, ces voyants lumineux sont des LEDs. Les voyants 20a et 20b, de couleur respective rouge et verte par exemple, permettent d'afficher des informations pertinentes à l'utilisateur UR.

Selon un exemple particulier, l'interface utilisateur 20 peut comprendre un écran d'affichage apte à afficher des informations permettant de guider l'utilisateur UR dans sa prise d'empreinte digitale sur le capteur 10.

Le dispositif périphérique DV2 peut éventuellement comprendre également au moins un moyen de commande (bouton, interrupteur, détecteur ...) permettant à l'utilisateur UR d'envoyer une instruction au dispositif périphérique DV2 et/ou à la carte à puce DV1 au travers du dispositif périphérique DV2.

L'interface de communication 22 permet au dispositif périphérique DV2 de recevoir au moins un signal de contrôle SG transmis par la carte à puce DV1.

Comme décrit par la suite, chaque signal de contrôle SG émis par la carte à puce DV1 est défini par un unique niveau d'une caractéristique électrique. On entend par « caractéristique électrique » l'un parmi les paramètres suivants : une tension, un courant, et une fréquence. Autrement dit, chaque signal de contrôle SG présente un unique niveau en tension, un unique niveau en courant, ou un unique niveau en fréquence. Cet unique niveau de signal est fixé par le processeur 4 de la carte à puce DV1 de sorte à déclencher la présentation (par affichage dans cet exemple) d'informations prédéterminées sur l'interface utilisateur 20 du composant périphérique DV2.

Comme déjà indiqué, le dispositif périphérique 22 ne comporte pas de processeur apte à interpréter une quelconque commande codée dans un langage informatique, qui pourrait provenir de la carte à puce DV1. Comme décrit ultérieurement dans des exemples particuliers, les signaux de contrôle SG émis par la carte à puce DV1 peuvent chacun se présenter sous la forme d'une impulsion analogique (en tension, en courant, ou en fréquence) pour forcer l'interface utilisateur 20 dans un état prédéterminé.

Dans un exemple particulier, le processeur 4 transmet des signaux de contrôle SG sous la forme d'une modulation en tension, en courant ou en fréquence.

L'interface utilisateur 20 est configurée pour se mettre dans un état prédéterminé en réponse à chaque signal de contrôle SG reçu, de sorte à guider un utilisateur UR dans l'acquisition d'une empreinte digitale par le capteur 10 d'empreintes digitales. Dans l'exemple considéré ici, chaque état prédéterminé de l'interface utilisateur 20 correspond à un état global [état voyant 20a, état voyant 20b] représentatif des états combinés des voyants lumineux 20a et 20b (chacun étant allumé ou éteint à un instant donné).

Par exemple, dans un état particulier de l'interface utilisateur 20, le voyant lumineux 20a est allumé tandis que le voyant lumineux 20b est éteint. Selon un autre exemple d'état de l'interface utilisateur 20, le voyant lumineux 20a est éteint tandis que le voyant lumineux 20b est allumé. Selon encore un autre exemple d'état de l'interface utilisateur 20, les voyants lumineux 20a et 20b sont allumés simultanément.

L'interface utilisateur 20 est configurée pour présenter, dans chaque état prédéterminé, une information respective guidant un utilisateur UR dans l'acquisition d'une empreinte digitale par le capteur 10 d'empreintes digitales. L'interface utilisateur 20 peut être configurée pour commuter entre différents états, par exemple de sorte à alterner entre un premier état et un deuxième état selon une fréquence donnée, afin de présenter une information particulière à l'utilisateur. Des exemples d'implémentation sont décrits ultérieurement.

L'interface utilisateur 20 permet par exemple d'indiquer à un utilisateur UR qu'une phase d'acquisition d'une empreinte digitale est initiée (invitant ainsi l'utilisateur à apposer son doigt sur le capteur 10), permet d'indiquer qu'une empreinte digitale est en cours de lecture, ou encore permet d'indiquer qu'une empreinte digitale a été acquise (terminant ainsi la phase d'acquisition de l'empreinte digitale).

Dans l'exemple représenté en **figures 1** et **2****,** chaque signal de contrôle SG a un effet direct sur l'état (allumé/éteint) de chaque voyant lumineux 20a, 20b de l'interface utilisateur 20, dans la mesure où le dispositif périphérique DV2 ne comporte que des composants passifs (mis à part une éventuelle source d'alimentation interne comme déjà indiqué). Aucune interprétation logicielle des signaux de contrôle n'est réalisée par le dispositif périphérique DV2 qui, comme déjà indiqué, est dépourvu de processeur.

Comme représenté en **figures 1** et **2****,** le dispositif périphérique DV2 peut également comprendre une batterie 24 (ou tout autre source d'alimentation interne appropriée) configurée pour alimenter électriquement l'interface utilisateur 20 et éventuellement la carte à puce DV1, bien que la présence d'une telle batterie dans le dispositif périphérique DV2 ne soit pas obligatoire. Selon un autre mode de réalisation, c'est par exemple la carte à puce DV1 qui comporte une source d'alimentation interne (une batterie) configurée pour alimenter électriquement ses composants internes (processeur 4, capteur 10...) ainsi que l'interface utilisateur 20 embarquée dans le dispositif périphérique DV2. Selon une autre variante, la carte à puce DV1 et le dispositif périphérique DV2 comportent chacun une batterie interne.

A noter que le système SY représenté en **figures 1** et **2** ne constitue qu'un exemple de réalisation, d'autres mises en oeuvre étant possibles dans le cadre de l'invention. L'homme du métier comprend en particulier que certains éléments de la carte à puce DV1 et du dispositif périphérique DV2 ne sont décrits dans ce document que pour faciliter la compréhension de l'invention, ces éléments n'étant pas obligatoires pour mettre en oeuvre l'invention.

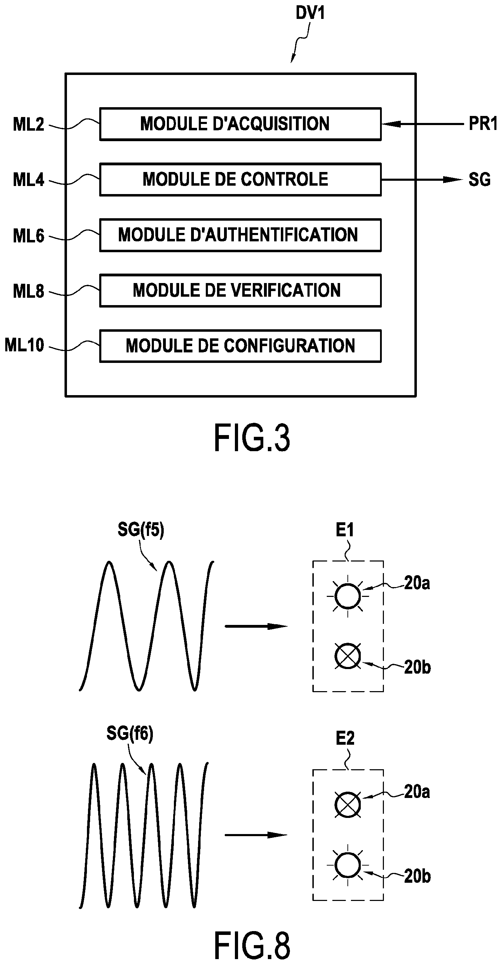

La **figure 3** représente schématiquement, selon un mode de réalisation particulier, les modules fonctionnels mis en oeuvre par le processeur 4 piloté par le programme d'ordinateur PG1, à savoir : un module d'acquisition ML2, un module de contrôle ML4, et éventuellement un module d'authentification ML6, un module de vérification ML8 et/ou un module de configuration ML10.

Le module d'acquisition ML2 est configuré pour acquérir (ou lire) une empreinte digitale PR1 en utilisant le capteur 10 d'empreintes digitales. Cette empreinte digitale PR1 prend la forme de données biométriques représentatives d'une empreinte digitale. Pour ce faire, le module d'acquisition peut récupérer des données mesurées par le capteur 10 et générer, à partir de ces données mesurées, une empreinte digitale PR1 par tout traitement approprié.

La mémoire 6 est apte à stocker l'empreinte digitale PR1 ainsi acquise.

Le module de contrôle ML4 est configuré pour transmettre au moins un signal de contrôle SG au dispositif périphérique DV2, afin de piloter à distance l'interface utilisateur 20. Comme déjà indiqué, chaque signal de contrôle SG émis par le module de contrôle ML4 est défini par un unique niveau d'une caractéristique électrique (tension, courant ou fréquence). Dans l'exemple représenté en **figures 1** et **2****,** les signaux de contrôle SG sont transmis via les contacts externes 2.

Le module d'authentification ML6 est configuré pour authentifier un utilisateur à partir d'une comparaison entre l'empreinte digitale PR1 acquise par l'intermédiaire du capteur 10 et les données d'une autre empreinte digitale DT1. En cas de correspondance détectée entre les données biométriques PR1 et DT1, l'authentification est positive.

Comme indiqué par la suite, cette autre empreinte digitale DT1 peut être acquise ultérieurement à l'empreinte PR1, de sorte que le module d'authentification ML6 vérifie la validité de cette autre empreinte digitale DT1 en la comparant à l'empreinte digitale PR1 servant d'empreinte digitale de référence.

Selon un autre exemple, cette autre empreinte digitale DT1 peut être préenregistrée dans la mémoire 6 en tant qu'empreinte digitale de référence, avant acquisition de l'empreinte digitale PR1. Le module d'authentification ML6 vérifie alors la validité de l'empreinte digitale PR1 en la comparant à l'empreinte digitale DT1 servant de référence.

Le module de vérification ML8 est configuré pour vérifier, au démarrage de la carte à puce DV1, un niveau d'un signal (RST ou CLK par exemple) détecté sur un contact externe 2 prédéterminé (C2 au sens de la norme ISO 7816, par exemple).

Comme décrit ultérieurement dans un mode de réalisation particulier, le module de configuration ML10 est configuré pour commuter la carte à puce DV1, soit dans un premier mode de fonctionnement soit dans un deuxième mode de fonctionnement, en fonction dudit niveau de signal détecté par le module de vérification ML8. La commutation entre ces deux modes de fonctionnement permet à la carte à puce DV1 d'utiliser un même contact externe 2 pour deux utilisations différentes, à savoir : soit pour une utilisation classique par exemple pour réaliser une communication ISO 7816 (par exemple telle que normalisée dans les normes IOS7616-3 et/ou ISO7816-4) avec un terminal externe, soit pour transmettre au moins un signal de contrôle SG au dispositif périphérique DV2 selon le principe de l'invention, de sorte à piloter l'interface utilisateur 20 et ainsi permettre à un utilisateur d'être guider lors d'un processus de capture d'empreinte digitale.

Le fonctionnement et la configuration des modules ML2-ML10 de la carte à puce DV1 apparaîtront plus précisément dans les exemples de réalisation décrits ci-après.

On comprendra que les modules ML2-ML10 tels que représentés en **figure 3** ne représentent qu'un exemple de mise en oeuvre non limitatif de l'invention.

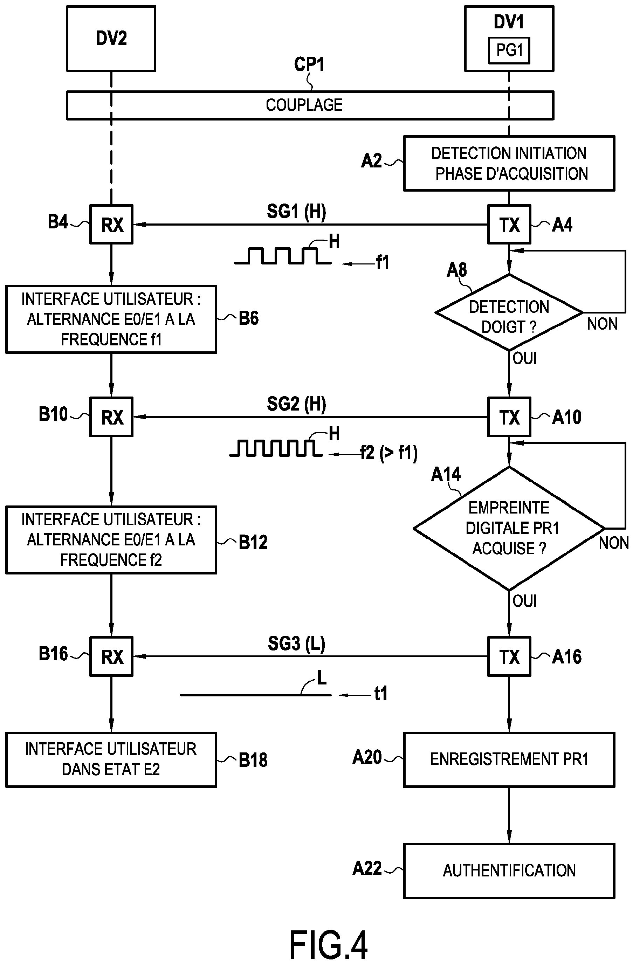

Un procédé de contrôle, mis en oeuvre par le système SY décrit précédemment en référence aux **figures 1-3****,** est à présent décrit en référence à la **figure 4****,** conformément à un mode de réalisation particulier de l'invention. Plus particulièrement, la carte à puce met en oeuvre un procédé de contrôle en exécutant le programme d'ordinateur PG1.

On suppose qu'un utilisateur UR (**figure 2**) souhaite faire l'acquisition d'une empreinte digitale à l'aide du capteur 10 embarqué dans la carte à puce DV1. Une telle capture peut notamment être nécessaire pour authentifier l'utilisateur, par exemple lors d'une transaction telle qu'une transaction de paiement (de type EMV ou autre) par exemple, ou encore pour obtenir l'accès à un service ou à un lieu sécurisé.

Lors d'une étape préliminaire CP1, on suppose que la carte à puce DV1 et le dispositif périphérique DV2 sont couplés ensemble afin qu'ils puissent coopérer pour réaliser le procédé de contrôle de l'invention. Ce couplage CP1 se traduit par l'établissement d'une liaison de communication L1, par contact dans cet exemple, entre la carte à puce DV1 et le dispositif périphérique DV2 (**figure 1**).

Comme représenté en **figure 2****,** on suppose par exemple que ce couplage est réalisé en insérant la carte à puce DV1 dans le dispositif périphérique DV2 prenant ici une forme d'étui. Ce couplage permet de mettre en contact les contacts externes 2 de la carte à puce DV1 avec l'interface de communication 22 du dispositif périphérique DV2. Comme déjà indiqué, d'autres types de couplages (notamment sans contact) sont toutefois possibles.

Au cours d'une étape de détection A2 (**figure 4**), la carte à puce DV1 détecte l'initiation d'une phase d'acquisition d'une empreinte digitale. Cette détection peut résulter du couplage CP1 réalisé ou éventuellement en réponse à un autre évènement prédéfini.

La carte à puce DV1 envoie (A4) ensuite au dispositif périphérique DV2 au moins un premier signal de contrôle SG1. Dans cet exemple, la carte à puce DV1 envoie (A4) une série de premiers signaux de contrôle SG1 pouvant se présenter sous la forme d'impulsions en tension, à une première fréquence d'émission notée f1. Chaque impulsion (représentée sous forme de créneau en **figure 4**) présente une même tension de crête correspondant à un niveau haut noté H (supérieur à la masse). Les premiers signaux de contrôle SG1 présentent donc chacun un unique niveau en tension noté H, permettant de forcer l'interface utilisateur 20 dans un premier état E1, décrit ci-après.

Le dispositif périphérique DV2 reçoit les premiers signaux de contrôle SG1 au cours d'une étape de réception B4. Chacun des premiers signaux de contrôle SG1 force l'interface utilisateur 20 dans le premier état E1 précité. Dans cet exemple, dans l'état E1, l'interface utilisateur 20 est telle que le premier voyant lumineux 20a est allumé tandis que le deuxième voyant lumineux 20b reste éteint. Dans les périodes d'inactivité entre chaque premier signal de contrôle SG1 reçu, l'interface utilisateur 20 est dans un état E0 de repos dans lequel les voyants lumineux 20a et 20b sont éteints.

L'interface utilisateur 20 réagit (B6) ainsi par le clignotement du premier voyant lumineux 20a de façon synchrone avec la série de premiers signaux de contrôle SG1 reçus ici sous la forme d'impulsions électriques à la fréquence f1, tandis que le deuxième voyants lumineux 20b reste éteint.

En réponse aux premiers signaux de contrôle SG1, l'interface utilisateur commute donc entre les états E0 et E1 à la première fréquence f1 de sorte à indiquer le début d'une phase d'acquisition d'une empreinte digitale par le capteur 10 d'empreintes digitales. Cette alternance entre les états E0 et E1 à la fréquence f1 invite ainsi l'utilisateur UR à apposer son doigt sur le capteur 10 afin de procéder à l'acquisition d'une empreinte digitale.

Au cours d'une étape A8 de détermination, la carte à puce DV1 détermine si elle détecte la présence d'un doigt sur le capteur 10. Dans l'affirmative, le procédé procède à l'étape A10 d'envoi au cours de laquelle la carte à puce DV1 transmet au moins un deuxième signal SG2 au dispositif périphérique DV2. Dans cet exemple, la carte à puce DV1 envoie (A10) une série de deuxième signaux de contrôle SG2 pouvant se présenter sous la forme d'impulsions en tension, à une deuxième fréquence d'émission notée f2.

Dans cet exemple, les deuxièmes signaux de contrôle SG2 sont identiques aux premiers signaux de contrôle SG1 dans le sens où ces signaux de contrôle présentent tous un même niveau unique en tension mais sont émis à des fréquences d'émission différentes (f1 ≠ f2). D'autres implémentations sont toutefois possibles où les premiers et deuxièmes signaux SG1 et SG2 sont différents de sortent qu'ils présentent des niveaux en tension différents.

Toujours dans cet exemple, la deuxième fréquence f2 est supérieure à la première fréquence f1 bien que l'inverse soit possible. Chaque impulsion (représentée sous forme de créneau en **figure 4**) présente une même tension de crête correspondant au niveau haut H précité. Les deuxièmes signaux de contrôle SG2 présentent donc chacun un unique niveau en tension noté H, permettant de forcer l'interface utilisateur 20 dans le premier état prédéterminé E1 déjà décrit ci-avant.

Le dispositif périphérique DV2 reçoit les deuxièmes signaux de contrôle SG2 au cours d'une étape de réception B10. Chacune des deuxièmes signaux de contrôle SG2 force l'interface utilisateur 20 dans le premier état E1 précité (voyant lumineux 20a allumé et voyant lumineux 20b éteint). Dans les périodes d'inactivité entre chaque deuxième signal de contrôle SG2 reçu, l'interface utilisateur 20 est dans un état E0 de repos dans lequel les voyants lumineux 20a et 20b sont éteints.

L'interface utilisateur 20 réagit (B12) ainsi par le clignotement du premier voyant lumineux 20a de façon synchrone avec la série de deuxièmes signaux de contrôle SG2 reçus ici sous la forme d'impulsions électriques à la fréquence f2, tandis que le deuxième voyant lumineux 20b reste éteint. Aussi, le clignotement du voyant lumineux 20a s'effectue à une fréquence supérieure à la fréquence de clignotement de l'étape B6 (f2 > f1).

En réponse aux deuxièmes signaux de contrôle SG2, l'interface utilisateur 20 commute donc entre les états E0 et E1 à la deuxième fréquence f2 de sorte à indiquer qu'une empreinte digitale PR1 est en cours d'acquisition. Cette alternance entre les états E0 et E1 à la fréquence f2 invite donc l'utilisateur UR à maintenir en position son doigt sur le capteur 10 tant que la capture d'empreinte n'est pas achevée.

Au cours d'une étape A14 de détermination, la carte à puce DV1 détermine si l'empreinte digitale PR1 de l'utilisateur UR a été acquise. Plus précisément, lors de cette acquisition, la carte à puce DV1 acquière des données biométriques représentatives de l'empreinte digitale PR1. Si l'empreinte digitale PR1 est acquise (A14), le procédé procède à l'étape A16 d'envoi au cours de laquelle la carte à puce DV1 transmet au moins un troisième signal SG3 au dispositif périphérique DV2. Dans cet exemple, la carte à puce DV1 envoie (A16) un troisième signal de contrôle SG3 se maintenant pendant une période de temps prédéterminée notée t1. Ce troisième signal de contrôle SG3 est ici un signal à la masse, et présente donc un unique niveau bas en tension noté L, permettant de forcer l'interface utilisateur 20 dans un deuxième état prédéterminé E2, décrit ci-après.

Le dispositif périphérique DV2 reçoit le troisième signal de contrôle SG3 au cours d'une étape de réception B16. Ce troisième signal de contrôle SG3 force l'interface utilisateur 20 dans le deuxième état E2 précité. Dans cet exemple, dans l'état E2, l'interface utilisateur 20 est telle que le premier voyant lumineux 20a est éteint tandis que le deuxième voyant lumineux 20b est allumé. Etant donné que le troisième signal de contrôle SG3 est ici émis en continu pendant une période de temps t1, le voyant lumineux 20b est maintenu allumé en continu pendant cette période de temps t1.

En réponse au troisième signal de contrôle SG3, l'interface utilisateur 20 se met (se configure) dans le deuxième état prédéterminé E2 de sorte à indiquer que la phase d'acquisition de l'empreinte digitale PR1 est terminée. Ce deuxième état E2 invite donc l'utilisateur UR à retirer son doigt du capteur 10, et éventuellement, à découpler la carte à puce DV1 du dispositif périphérique DV2.

Dans l'exemple décrit ici, le ou les signaux SG transmis pour déclencher chaque état respectif de l'interface utilisateur sont différents (puisque les états E1 et E2 sont différents l'un de l'autre).

A l'issue de l'étape d'envoi A16, la phase d'acquisition de l'empreinte digitale est achevée.

La carte à puce DV1 peut alors enregistrer (A20) l'empreinte digitale PR1 ainsi acquise dans sa mémoire non volatile 6. Cette empreinte digitale PR1 peut ainsi être consultée ultérieurement par la carte à puce DV1 pour une utilisation qui peut varier selon le cas.

La carte à puce DV1 peut ainsi authentifier (A22) l'utilisateur UR à partir d'une comparaison de l'empreinte digitale PR1 acquise avec une autre empreinte digitale. Si la carte à puce DV1 détecte qu'il y a correspondance entre l'empreinte digitale PR1 et les données d'une autre empreinte DT1, elle détermine que l'authentification de l'utilisateur UR est passée avec succès.

Plus particulièrement, dans un premier exemple particulier, l'empreinte digitale PR1 est enregistrée en tant qu'empreinte digitale de référence dans la mémoire 6 (étape A20). Dans ce cas, la capture de l'empreinte digitale de référence PR1 est réalisée lors d'une phase d'enrôlement, par exemple lors d'une configuration initiale (personnalisation) de la carte à puce DV1. Au cours de l'étape A22 d'authentification, la carte à puce DV2 authentifie l'utilisateur UR (**figure 2**) à partir d'une comparaison de l'empreinte digitale de référence PR1 et d'une autre empreinte digitale DT1 acquise ultérieurement en utilisant le capteur 10. La carte à puce DV1 vérifie la validité de l'empreinte ultérieure DT1 en la comparant à l'empreinte de référence PR1. L'empreinte digitale PR1 peut ainsi être utilisée en tant qu'empreinte de référence pour authentifier l'utilisateur UR au cours d'usages ultérieurs de la carte à puce DV1, par exemple lors de transactions, telles que des transactions bancaires (transaction de paiement, de transfert...) ou des transactions d'authentification.

Dans un deuxième exemple particulier, l'empreinte digitale PR1 est enregistrée à l'étape A20 dans la mémoire 6. Puis, la carte à puce DV1 authentifie l'utilisateur UR à partir d'une comparaison de l'empreinte digitale PR1 acquise et de données d'empreinte DT1 préenregistrées dans la mémoire 6 en tant qu'empreinte digitale de référence. Dans ce cas, l'empreinte digitale de référence DT1 peut être acquise et enregistrée par la carte à puce DV1, lors d'une phase d'enrôlement préalable à l'acquisition de l'empreinte digitale PR1.

L'utilisateur pourrait également utiliser l'invention pour faire l'acquisition de plusieurs empreintes digitales et/ou plusieurs acquisitions d'une même empreinte digitale. La mise en oeuvre des étapes A2 à A22, et B4 à B18 peut donc être répétée avec la présentation par l'utilisateur UR d'un doigt à chaque itération. Ainsi, dans un mode d'implémentation particulier, la carte à puce DV1 peut en outre envoyer un quatrième signal de contrôle SG au dispositif périphérique DV2 pour mettre l'interface 20 dans un troisième état prédéterminé, par exemple de sorte à indiquer le nombre d'empreintes enregistrés.

L'invention est avantageuse en ce qu'elle offre une solution simple et facile d'utilisation pour l'acquisition d'empreintes biométriques à partir d'une carte à puce et ce, sans compromettre en particulier la robustesse et les caractéristiques mécaniques de la carte à puce. En effet, l'interface utilisateur est embarquée dans un dispositif périphérique qui peut avantageusement être couplé de façon sélective avec la carte à puce, par exemple uniquement lorsque cela est nécessaire pour procéder à un enrôlement par capture d'une empreinte biométrique. La carte à puce peut être découplée du dispositif périphérique lorsque ce dernier n'est pas utile, préservant ainsi l'interface utilisateur d'éventuelles défaillances en cas de contraintes mécaniques (torsions, chocs, chutes...) appliquée à la carte à puce.

L'invention permet de guider les utilisateurs afin qu'ils puissent aisément réaliser une capture d'empreinte biométrique à partir de leur carte à puce sans que cela ne requière de modifications complexes des cartes à puce actuelles ni de connaissances approfondies de la part des utilisateurs.

Une phase d'enrôlement destinée à acquérir une empreinte biométrique de référence, par exemple lors d'une phase de configuration initiale (personnalisation), peut en particulier être complexe ou déroutante, notamment si elle requière l'acquisition de plusieurs empreintes selon une séquence particulière. L'invention permet d'éviter que l'utilisateur soit troublé lorsqu'une telle phase d'enrôlement est réalisée à partir d'une carte à puce comportant un capteur biométrique.

Dans un exemple particulier, le dispositif périphérique embarque aussi une batterie ce qui permet d'alimenter électriquement l'interface utilisateur, et éventuellement aussi la carte à puce DV1 lorsque celle-ci est couplée (par contact ou sans contact) avec le dispositif périphérique.

L'invention permet avantageusement d'authentifier un utilisateur en comparant une empreinte digitale acquise avec d'autres données d'empreinte, et ce sans qu'il soit nécessaire de sortir ces données de la carte à puce. Les données PR1 et DT1 peuvent avantageusement être conservées de façon sécurisée dans une mémoire de la carte à puce.

On comprend bien entendu que les signaux de contrôle SG1, SG2 et SG3 telles que décrits ci-avant en référence à la figure 4 ne constituent que des exemples non limitatifs de l'invention, d'autres configurations étant possibles (pour SG, et donc pour l'état de l'interface utilisateur obtenue en réponse) dans le cadre de l'invention.

Dans les exemples de réalisation décrits ci-avant en référence aux **figures 1-4****,** la liaison de communication L1, au travers duquel est transmis chaque signal de contrôle

SG, est établie par contact au travers d'au moins un contact externe 2 de la carte à puce DV1.

En utilisant par exemple un contact externe tel que défini par la norme ISO 7816, on peut utiliser avantageusement la structure actuelle d'une majorité des cartes à puce sur le marché, évitant ainsi des modifications structurelles qui poseraient des difficultés en pratique (coûts, délais...).

Comme représenté par exemple en **figure 5,** la carte à puce DV1 peut être configurée pour utiliser un contact externe 2 conforme à la norme ISO 7816-2 pour transmettre chaque signal de contrôle SG au dispositif périphérique DV2.

Selon un premier exemple particulier, la carte à puce DV1 est configurée pour transmettre chaque signal de contrôle SG via le contact externe C6 au sens de la norme ISO 7816, c'est-à-dire un contact dont l'usage est laissé à la discrétion du fabricant. L'un des contacts C4 et C8 au sens de la norme ISO 7816 peut également être utilisé à cette fin.

Selon un deuxième exemple particulier, la carte à puce DV1 est configurée pour transmettre chaque signal de contrôle SG via le contact externe C7 au sens de la norme ISO 7816. Dans ce cas, le contact C7 peut donc avoir différentes utilisations, à savoir : soit une utilisation classique de contact d'entrées/sorties, soit une utilisation selon le principe de l'invention pour transmettre des signaux de contrôle SG. Il est alors nécessaire que la carte à puce DV1 puisse déterminer quelle utilisation doit être faite du contact C7 à un instant donné. Pour ce faire, la carte à puce DV1 peut être configuré pour commuter entre:
- un premier mode de fonctionnement MD1 - dit mode de transaction - dans lequel la carte à puce DV1 utilise le contact externe C7 au sens de la norme ISO 7816 pour réaliser une communication de type ISO 7816 avec un terminal externe (non représenté) ; et
- un deuxième mode de fonctionnement MD2 - dit mode d'acquisition d'empreinte - dans lequel la carte à puce DV1 utilise le contact externe C7 au sens de la norme ISO 7816 pour transmettre chaque signal de contrôle SG au dispositif périphérique DV2.

A noter que différentes configurations peuvent être envisagées pour permettre à la carte à puce DV1 de détecter si une phase d'enrôlement (acquisition d'empreinte digitale) est en cours, et donc pour permettre à la carte à puce DV1 de se configurer dans le mode de fonctionnement approprié.

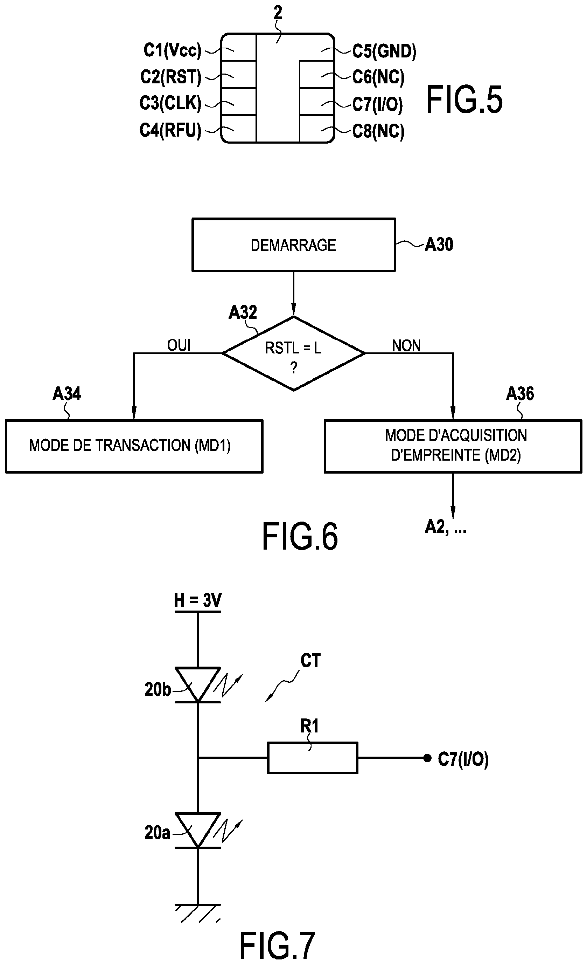

La **figure 6** représente, selon un mode de réalisation particulier, un procédé contrôle mis en oeuvre par la carte à puce DV1, et plus généralement par le système SY, dans le cas du deuxième exemple particulier ci-dessous où la carte à puce DV1 est configurée pour utiliser le contact C7 pour transmettre les signaux de contrôle SG au dispositif périphérique DV2.

Plus précisément, au cours d'une étape A30 de détection, la carte à puce DV1 détecte qu'elle est démarrée (ou activée), c'est-à-dire que son processeur 4 est mis sous tension.

En réponse au démarrage, la carte à puce DV1 vérifie (A32) le niveau du signal RST (pour « Reset ») détecté sur le contact externe C2 au sens de la norme ISO 7816. Plus précisément, la carte à puce DV1 détermine (A32) dans cet exemple si le signal RST détecté sur le contact externe C2 au sens de la norme ISO 7816 atteinte une valeur prédéterminée notée L.

Selon le standard ISO 7816-3, lors de l'activation de la carte à puce DV1, le signal RST doit théoriquement être maintenu à un niveau bas pendant une durée prédéterminée (au moins 400 cycles d'horloge) lorsque la carte à puce est mise sous tension sur le contact externe C1 (Vcc) au sens de la norme ISO 7816.

Aussi, si le signal RST détecté en A32 est à une valeur L prédéterminée (état bas dans cet exemple), alors la carte à puce DV1 se configure (A34) dans le mode de transaction MD1 permettant une utilisation classique du contact externe C7. Dans le cas contraire (RST ≠ L), alors la carte à puce DV1 se configure (A36) dans le mode d'acquisition d'empreinte MD2 permettant l'acquisition d'une empreinte digitale conformément au principe de l'invention. Une fois le mode d'acquisition d'empreinte MD2 activé, la carte à puce DV1 peut réaliser le procédé de contrôle tel que représenté en **figure 4** (A2, ...).

La carte à puce DV1 commute ainsi, soit dans le mode de transaction MD1 soit dans le mode d'acquisition d'empreinte MD2, en fonction du niveau détecté du signal RST sur le contact externe C2 au sens de la norme ISO 7816.

L'invention permet ainsi à la carte à puce DV1 de détecter efficacement l'utilisation qui doit être faite du contact externe C7 dans le cas où celui est utilisé notamment dans le cadre de l'invention.

Selon un autre exemple, la sélection du mode de fonctionnement (MD1 ou MD2) peut être réalisée de façon analogue par la carte à puce à partir cette fois du niveau de signal, ou de la fréquence dudit signal, détecté sur le contact externe C3 au sens de la norme ISO 7816, correspondant à l'horloge (CLK).

Selon un autre exemple, la sélection du mode de fonctionnement (MD1 ou MD2) peut être réalisée par la carte à puce à partir du niveau de signal sur le contact externe C1 au sens de la norme ISO 7816, correspondant à l'alimentation (VCC).

Selon un autre exemple, la transmission de chaque signal de contrôle SG peut se faire de façon analogue via le contact externe C2 et/ou C3 au sens de la norme ISO7816. Dans ce cas, les contacts C2 et C3 peuvent donc avoir différentes utilisations, à savoir : soit une utilisation classique de contact d'entrée, soit une utilisation selon le principe de l'invention pour transmettre des signaux de contrôle SG.

La **figure 7** représente schématiquement, selon un mode de réalisation particulier, un circuit CT permettant d'imposer à l'interface utilisateur 20 des états prédéterminés E1 et E2 comme déjà décrits précédemment en référence à la **figure 4****.**

Dans l'exemple envisagé ici, le circuit CT est compris dans le dispositif périphérique DV2. Dans une variante, une partie au moins de ce circuit CT peut être agencée dans la carte à puce DV1.

Comme représenté en **figure 7****,** le circuit CT comprend deux LEDs 20a et 20b ainsi qu'une résistance R1. Lorsque la carte à puce DV1 est couplée avec le dispositif périphérique DV2, le contact externe C7 est connecté à une borne de la résistance R1. Les deux LEDs 20a, 20b sont connectées en série de sorte que la LED 20a soit connectée sur une borne à la masse et que la LED 20b soit connectée sur une borne à une alimentation électrique imposant un niveau haut noté H (H = 3V par exemple). La deuxième borne de la résistance R1 est connectée sur les bornes communes des deux LEDs 20a, 20b.

De cette manière, la carte à puce DV1 est configurée pour transmettre via le contact externe C7 au dispositif périphérique DV1, en tant que signal de contrôle SG :
- une tension au niveau haut H prédéterminé, supérieur à la masse, pour allumer uniquement la première LED 20a parmi les deux LEDs (état E1 déjà décrit précédemment en référence à la **figure 4**) ; et
- une tension à la masse, pour allumer uniquement la deuxième LED 20b parmi les deux LEDs (état E2 déjà décrit précédemment en référence à la **figure 4**).

Lorsqu'aucun signal de contrôle SG n'est envoyé (les LEDs 20a et 20b restent éteintes, ce qui correspond l'état de repos E0 déjà décrit précédemment en référence à la **figure 4**)**,** la carte à puce DV1 peut par exemple imposer au travers du contact externe C7 un signal flottant, ce dernier étant inhérent au système SY. Ce signal flottant (dont la tension est comprise en 0 et le niveau H) ne permet ni à la première LED 20a ni à la deuxième LED 20b de s'allumer.

Comme déjà indiqué, une série de signaux de contrôle SG à une fréquence d'émission donnée peut être transmise par la carte à puce DV1 au dispositif périphérique DV2 afin de forcer l'interface utilisateur 20 à alterner de manière synchrone entre deux états (entre E0 et E1 par exemple, ou entre E0 et E2).

Par ailleurs, comme déjà indiqué, chaque signal de contrôle SG selon l'invention est défini par un unique niveau d'une caractéristique électrique. Dans les mises en oeuvre de l'invention décrites précédemment, les signaux de contrôle sont définis par un unique niveau en tension. Autrement dit, c'est le niveau de tension du signal de contrôle qui impose un état prédéfini correspondant à l'interface utilisateur. Il est toutefois possible de transmettre des signaux de contrôle défini par un unique niveau de courant ou par un unique niveau en fréquence.

La **figure 8** représente schématiquement un exemple dans lequel les signaux de contrôle SG transmis par la carte à puce DV1 au dispositif périphérique pour contrôler l'état de l'interface utilisateur 20 sont définis par leur niveau unique en fréquence. Comme illustré, un premier signal de contrôle SG à la fréquence d'émission f5 peut être transmis par la carte à puce DV1 pour forcer l'interface utilisateur 20 dans le premier état E1 dans lequel le premier voyant lumineux 20a est allumé et le deuxième voyant lumineux est éteint. De même, un deuxième signal de contrôle SG à la fréquence d'émission f6 peut être transmis par la carte à puce DV1 pour forcer l'interface utilisateur 20 dans le deuxième état E2 dans lequel le premier voyant lumineux 20a est éteint et le deuxième voyant lumineux est allumé. D'autres implémentations sont toutefois possibles.

Dans les exemples de mises en oeuvre décrits dans ce document, l'invention permet de capturer une empreinte digitale d'un utilisateur à l'aide d'un capteur embarqué dans une carte à puce. On comprend que le principe de l'invention s'applique plus généralement à la capture d'une quelconque empreinte biométrique en utilisant un capteur biométrique embarqué dans une carte à puce. Ainsi, il est par exemple possible de faire l'acquisition d'un électrocardiogramme conformément au principe de l'invention, à partir d'un capteur embarqué dans la carte à puce.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant afin de répondre à un besoin bien particulier.

## Revendications

1. Système (SY) comprenant une carte à puce (DV1) et un dispositif périphérique (DV2) configurés pour coopérer ensemble pour permettre l'acquisition d'une empreinte biométrique, la carte à puce et le dispositif périphérique étant séparés l'un de l'autre, ledit système comprenant au moins une source d'alimentation interne comprise dans l'un au moins de ladite carte à puce ou dudit dispositif périphérique,
la carte à puce comprenant :
- un capteur d'empreintes biométrique configuré pour faire une acquisition d'une empreinte biométrique ; et
- un module de contrôle configuré pour transmettre au moins un signal de contrôle au dispositif périphérique, chaque signal de contrôle étant défini par un unique niveau d'une caractéristique électrique parmi une tension, un courant et une fréquence ;
dans lequel le dispositif périphérique comprend, mis à part ladite au moins une éventuelle source d'alimentation interne, uniquement des composants passifs, parmi lesquels :
- une interface utilisateur configurée pour se mettre dans un état prédéterminé en réponse à chaque signal de contrôle reçu, de sorte à guider un utilisateur dans l'acquisition de l'empreinte biométrique par le capteur d'empreintes biométriques, ladite source d'alimentation interne étant configurée pour alimenter électriquement l'interface utilisateur ;
dans lequel l'interface utilisateur est configurée pour présenter, dans chaque état prédéterminé, une information respective guidant un utilisateur dans l'acquisition de ladite empreinte biométrique par le capteur d'empreintes biométriques.

2. Système selon la revendication 1, dans lequel le dispositif périphérique ne comporte aucun moyen de traitement actif apte à interpréter une quelconque commande provenant de la carte à puce.

3. Système selon la revendication 1 ou 2, dans lequel la carte à puce comprend :
- une mémoire pour stocker ladite empreinte biométrique en tant qu'empreinte biométrique de référence, une fois celle-ci acquise par le capteur d'empreintes biométriques ; et
- un module d'authentification configuré pour authentifier ledit utilisateur à partir d'une comparaison de l'empreinte biométrique de référence et d'une autre empreinte biométrique acquise ultérieurement.

4. Système selon la revendication 1 ou 2, dans lequel la carte à puce comprend :
- une mémoire pour stocker ladite empreinte biométrique, une fois celle-ci acquise par le capteur d'empreintes biométriques ; et
- un module d'authentification configuré pour authentifier ledit utilisateur à partir d'une comparaison de l'empreinte biométrique acquise et de données d'empreinte préenregistrées en tant qu'empreinte biométrique de référence.

5. Système selon l'une quelconque des revendications 1 à 4, dans lequel le dispositif périphérique comprend une batterie pour alimenter électriquement l'interface utilisateur.

6. Système selon l'une quelconque des revendications 1 à 5, dans lequel l'interface utilisateur est configurée pour :
- commuter entre deux états prédéterminés (E0, E1) à une première fréquence (f1) en réponse à une série de premiers signaux de contrôle (SG1) reçus en provenance de la carte à puce, de sorte à indiquer le début d'une phase d'acquisition d'une empreinte biométrique par le capteur d'empreintes biométriques ;
- commuter entre deux états prédéterminés (E0, E1) à une deuxième fréquence (f2) en réponse à une série de deuxièmes signaux de contrôle (SG2) reçus en provenance de la carte à puce, de sorte à indiquer qu'une empreinte biométrique est en cours d'acquisition ; et
- se mettre dans un troisième état prédéterminé (E2) en réponse à un troisième signal de contrôle (SG3) reçu en provenance de la carte à puce, de sorte à indiquer que la phase d'acquisition de l'empreinte biométrique est terminée,
dans lequel les première et deuxième fréquences sont distinctes l'une de l'autre, et le troisième signal (SG3) est distinct des premier et deuxième signaux de contrôle (SG1, SG2).

7. Système selon l'une quelconque des revendications 1 à 6, dans lequel l'interface utilisateur comprend une première LED et une deuxième LED distincte l'une de l'autre,
le module de contrôle étant configuré pour transmettre au dispositif périphérique, en tant que signal de contrôle :
- une tension à la masse pour allumer uniquement la première LEDs parmi les deux LEDs ; et
- une tension à un niveau haut prédéterminé, supérieur à la masse, pour allumer uniquement la deuxième LEDs parmi les deux LEDs.

8. Système selon l'une quelconque des revendications 1 à 7, dans lequel la carte à puce est une carte comportant des contacts externes, conformes à la norme ISO 7816, pour transmettre par contact chaque signal de contrôle au dispositif périphérique.

9. Système selon la revendication 8, dans lequel la carte à puce est configurée pour transmettre chaque signal de contrôle via le contact externe C4, C6 ou C8 au sens de la norme ISO 7816.

10. Système selon la revendication 8, dans lequel la carte à puce est configurée pour transmettre chaque signal de contrôle via un contact parmi les contacts externes C2, C3 et C7 au sens de la norme ISO 7816,
dans lequel la carte à puce est configurée pour commuter entre:
- un premier mode de fonctionnement dans lequel la carte à puce utilise ledit un contact parmi les contacts externes C2, C3 et C7 au sens de la norme ISO 7816 pour réaliser une communication de type ISO 7816 avec un terminal externe ; et
- un deuxième mode de fonctionnement dans lequel la carte à puce utilise ledit un contact parmi les contacts externes C2, C3 et C7 au sens de la norme ISO 7816 pour transmettre chaque signal de contrôle au dispositif périphérique ;
la carte à puce comprenant :
- un module de vérification configuré pour vérifier, au démarrage de la carte à puce, au moins un niveau de signal parmi le signal RST détecté sur le contact externe C2 au sens de la norme ISO 7816, le signal CLK détecté sur le contact externe C3 au sens de la norme ISO 7816 et le signal d'alimentation VCC détecté sur le contact externe C1 au sens de la norme ISO 7816; et
- un module de configuration configuré pour commuter la carte à puce, soit dans le premier mode de fonctionnement soit dans le deuxième mode de fonctionnement, en fonction dudit au moins un niveau de signal détecté parmi le signal RST, le signal CLK et le signal VCC.

11. Système selon l'une quelconque des revendications 1 à 10, dans lequel la carte à puce est une carte de paiement.

12. Système selon l'une quelconque des revendications 1 à 11, dans lequel le dispositif périphérique est un étui dans lequel la carte à puce s'insère pour permettre la transmission dudit au moins un signal de contrôle depuis le module de contrôle vers le dispositif périphérique.

13. Procédé de contrôle mis en oeuvre par un système comprenant une carte à puce et un dispositif périphérique coopérant ensemble pour permettre l'acquisition d'une empreinte biométrique, la carte à puce et le dispositif périphérique étant séparés l'un de l'autre, , ledit système comprenant au moins une source d'alimentation interne comprise dans l'un au moins de ladite carte à puce ou dudit dispositif périphérique,
la carte à puce comprenant un capteur d'empreintes biométriques et le dispositif périphérique comprenant, mis à part ladite au moins une éventuelle source d'alimentation interne, uniquement des composants passifs parmi lesquels une interface utilisateur, ladite source d'alimentation interne étant configurée pour alimenter électriquement l'interface utilisateur ;
dans lequel le procédé comprend :
acquisition d'une empreinte biométrique par le capteur d'empreintes biométriques;
transmission, depuis la carte à puce vers le dispositif périphérique, d'au moins un signal de contrôle, chaque signal de contrôle étant défini par un unique niveau d'une caractéristique électrique parmi une tension, un courant et une fréquence ; et
configuration de l'interface utilisateur dans un état prédéterminé en réponse à chaque signal de contrôle reçu, de sorte à guider un utilisateur dans l'acquisition de l'empreinte biométrique par le capteur d'empreintes biométriques, dans lequel l'interface utilisateur présente, dans chaque état prédéterminé, une information respective guidant un utilisateur dans l'acquisition de ladite empreinte biométrique par le capteur d'empreintes biométriques.

## Patentansprüche

1. System (SY), das eine Chipkarte (DV1) und ein Peripheriegerät (DV2) enthält, die konfiguriert sind, zusammenzuwirken, um die Erfassung eines biometrischen Abdrucks zu ermöglichen, wobei die Chipkarte und das Peripheriegerät voneinander getrennt sind, wobei das System mindestens eine interne Versorgungsquelle enthält, die in mindestens einem von der Chipkarte oder dem Peripheriegerät enthalten ist,
wobei die Chipkarte enthält:
- einen biometrischen Abdrucksensor, der konfiguriert ist, eine Erfassung eines biometrischen Abdrucks durchzuführen; und
- ein Kontrollmodul, das konfiguriert ist, mindestens ein Kontrollsignal an das Peripheriegerät zu übertragen, wobei jedes Kontrollsignal durch einen einzigen Pegel eines elektrischen Merkmals unter einer Spannung, einem Strom und einer Frequenz definiert wird;
wobei das Peripheriegerät abgesehen von der mindestens einen möglichen internen Versorgungsquelle nur passive Bauteile enthält, darunter:
- eine Benutzerschnittstelle, die konfiguriert ist, sich als Antwort auf jedes empfangene Kontrollsignal in einen vorbestimmten Zustand zu versetzen, um einen Benutzer bei der Erfassung des biometrischer Abdrucks durch den biometrischen Abdrucksensor zu leiten, wobei die interne Versorgungsquelle konfiguriert ist, die interne Benutzerschnittstelle elektrisch zu versorgen;
wobei die Benutzerschnittstelle konfiguriert ist, in jedem vorbestimmten Zustand eine Information aufzuweisen, die einen Benutzer bei der Erfassung des biometrischen Abdrucks durch den biometrischen Abdrucksensor leitet.

2. System nach Anspruch 1, wobei das Peripheriegerät keine aktive Verarbeitungseinrichtung aufweist, die fähig ist, einen beliebigen von der Chipkarte kommenden Befehl zu interpretieren.

3. System nach Anspruch 1 oder 2, wobei die Chipkarte enthält:
- einen Speicher, um den biometrischen Abdruck als biometrischen Bezugsabdruck zu speichern, sobald dieser vom biometrischen Abdrucksensor erfasst wurde; und
- ein Authentifizierungsmodul, das konfiguriert ist, den Benutzer ausgehend von einem Vergleich des biometrischen Bezugsabdrucks und eines später erfassten anderen biometrischen Abdrucks zu authentifizieren.

4. System nach Anspruch 1 oder 2, wobei die Chipkarte enthält:
- einen Speicher, um den biometrischen Abdruck zu speichern, sobald dieser vom biometrischen Abdrucksensor erfasst wurde; und
- ein Authentifizierungsmodul, das konfiguriert ist, den Benutzer ausgehend von einem Vergleich des erfassten biometrischen Abdrucks und von vorab als biometrischer Bezugsabdruck aufgezeichneten Abdruckdaten zu authentifizieren.

5. System nach einem der Ansprüche 1 bis 4, wobei das Peripheriegerät eine Batterie enthält, um die Benutzerschnittstelle elektrisch zu versorgen.

6. System nach einem der Ansprüche 1 bis 5, wobei die Benutzerschnittstelle konfiguriert ist, um:
- als Antwort auf eine von der Chipkarte empfangenen Reihe von ersten Kontrollsignalen (SG1) zwischen zwei vorbestimmten Zuständen (E0, E1) auf einer ersten Frequenz (f1) umzuschalten, um den Beginn einer Erfassungsphase eines biometrischen Abdrucks durch den biometrischen Abdrucksensor anzuzeigen;
- als Antwort auf eine von der Chipkarte empfangenen Reihe von zweiten Kontrollsignalen (SG2) zwischen zwei vorbestimmten Zuständen (E0, E1) auf einer zweiten Frequenz (f2) umzuschalten, um anzuzeigen, dass ein biometrischer Abdruck gerade erfasst wird; und
- sich als Antwort auf ein von der Chipkarte empfangenes drittes Kontrollsignal (SG3) in einen dritten vorbestimmten Zustand (E2) zu versetzen, um anzuzeigen, dass die Erfassungsphase des biometrischen Abdrucks beendet ist,
wobei die erste und die zweite Frequenz sich voneinander unterscheiden, und das dritte Signal (SG3) sich vom ersten und vom zweiten Kontrollsignal (SG1, SG2) unterscheidet.

7. System nach einem der Ansprüche 1 bis 6, wobei die Benutzerschnittstelle eine erste LED und eine zweite LED enthält, die sich voneinander unterscheiden,
wobei das Kontrollmodul konfiguriert ist, an das Peripheriegerät als Kontrollsignal zu übertragen:
- eine Massespannung, um nur die erste LED unter den zwei LEDs einzuschalten; und
- eine Spannung auf einem vorbestimmten hohen Pegel, höher als die Masse, um nur die zweite LED unter den zwei LEDs einzuschalten.

8. System nach einem der Ansprüche 1 bis 7, wobei die Chipkarte eine Karte ist, die externe Kontakte gemäß der Norm ISO 7816 aufweist, um jedes Kontrollsignal durch Kontakt an das Peripheriegerät zu übertragen.

9. System nach Anspruch 8, wobei die Chipkarte konfiguriert ist, jedes Kontrollsignal über den externen Kontakt C4, C6 oder C8 im Sinne der Norm ISO 7816 zu übertragen.

10. System nach Anspruch 8, wobei die Chipkarte konfiguriert ist, jedes Kontrollsignal über einen Kontakt unter den externen Kontakten C2, C3 und C7 im Sinne der Norm ISO 7816 zu übertragen,
wobei die Chipkarte konfiguriert ist, umzuschalten zwischen:
- einer ersten Betriebsart, in der die Chipkarte den einen Kontakt unter den externen Kontakte C2, C3 und C7 im Sinne der Norm ISO 7816 verwendet, um eine Kommunikation des Typs ISO 7816 mit einem externen Endgerät herzustellen; und
- einer zweiten Betriebsart, in der die Chipkarte den einen Kontakt unter den externen Kontakte C2, C3 und C7 im Sinne der Norm ISO 7816 verwendet, um jedes Kontrollsignal an das Peripheriegerät zu übertragen;
wobei die Chipkarte enthält:
- ein Überprüfungsmodul, das konfiguriert ist, beim Start der Chipkarte mindestens einen Signalpegel unter dem auf dem externen Kontakt C2 im Sinne der Norm ISO 7816 erkannten Signal RST, dem auf dem externen Kontakt C3 im Sinne der Norm ISO 7816 erkannten Signal CLK und dem auf dem externen Kontakt C1 im Sinne der Norm ISO 7816 erkannten Versorgungssignal VCC zu überprüfen; und
- ein Konfigurationsmodul, das konfiguriert ist, die Chipkarte entweder in die erste Betriebsart oder in die zweite Betriebsart umzuschalten, abhängig von dem mindestens einen unter dem Signal RST, dem Signal CLK und dem Signal VCC erkannten Signalpegel.

11. System nach einem der Ansprüche 1 bis 10, wobei die Chipkarte eine Zahlungskarte ist.

12. System nach einem der Ansprüche 1 bis 11, wobei das Peripheriegerät ein Etui ist, in das die Chipkarte eingefügt wird, um die Übertragung des mindestens einen Kontrollsignals vom Kontrollmodul zum Peripheriegerät zu ermöglichen.

13. Kontrollverfahren, durchgeführt von einem System, das eine Chipkarte und ein Peripheriegerät enthält, die zusammenwirken, um die Erfassung eines biometrischen Abdrucks zu ermöglichen, wobei die Chipkarte und das Peripheriegerät voneinander getrennt sind, wobei das System mindestens eine interne Versorgungsquelle enthält, die in mindestens einem von der Chipkarte oder dem Peripheriegerät enthalten ist,
wobei die Chipkarte einen biometrischen Abdrucksensor enthält, und das Peripheriegerät abgesehen von der mindestens einen möglichen internen Versorgungsquelle nur passive Bauteile enthält, darunter eine Benutzerschnittstelle, wobei die interne Versorgungsquelle konfiguriert ist, die Benutzerschnittstelle elektrisch zu versorgen;
wobei das Verfahren enthält:
Erfassung eines biometrischen Abdrucks durch den biometrischen Abdrucksensor;
Übertragung mindestens eines Kontrollsignals von der Chipkarte zum Peripheriegerät, wobei jedes Kontrollsignal durch einen einzigen Pegel eines elektrischen Merkmals unter einer Spannung, einem Strom und einer Frequenz definiert wird, und
Konfiguration der Benutzerschnittstelle in einem vorbestimmten Zustand als Antwort auf jedes empfangene Kontrollsignal, um einen Benutzer bei der Erfassung des biometrischen Abdrucks durch den biometrischen Abdrucksensor zu leiten, wobei die Benutzerschnittstelle in jedem vorbestimmten Zustand eine Information aufweist, die einen Benutzer bei der Erfassung des biometrischen Abdrucks durch den biometrischen Abdrucksensor leitet.

## Claims

1. System (SY) comprising a chip card (DV1) and a peripheral device (DV2) that are configured to cooperate with one another so as to allow the acquisition of a biometric fingerprint, the chip card and the peripheral device being separate from one another, said system comprising at least one internal power source contained within at least one of said chip card or said peripheral device,
the chip card comprising:
- a biometric fingerprint sensor configured to acquire a biometric fingerprint; and
- a control module configured to transmit at least one control signal to the peripheral device, each control signal being defined by a single level of an electrical characteristic from among a voltage, a current and a frequency;
wherein the peripheral device, apart from said at least one possible internal power source, comprises only passive components, including:
- a user interface configured to adopt a predetermined state in response to each received control signal, so as to guide a user in terms of acquiring the biometric fingerprint using the biometric fingerprint sensor, said internal power source being configured to supply electric power to the user interface;
wherein the user interface is configured to present, in each predetermined state, respective information guiding a user in terms of acquiring said biometric fingerprint using the biometric fingerprint sensor.

2. System according to Claim 1, wherein the peripheral device does not comprise any active processing means able to interpret any command from the chip card.

3. System according to Claim 1 or 2, wherein the chip card comprises:
- a memory for storing said biometric fingerprint as a reference biometric fingerprint, once it has been acquired by the biometric fingerprint sensor; and
- an authentication module configured to authenticate said user based on a comparison between the reference biometric fingerprint and another, subsequently acquired, biometric fingerprint.

4. System according to Claim 1 or 2, wherein the chip card comprises:
- a memory for storing said biometric fingerprint, once it has been acquired by the biometric fingerprint sensor; and
- an authentication module configured to authenticate said user based on a comparison between the acquired biometric fingerprint and fingerprint data prerecorded as a reference biometric fingerprint.

5. System according to any one of Claims 1 to 4, wherein the peripheral device comprises a battery for supplying electric power to the user interface.

6. System according to any one of Claims 1 to 5, wherein the user interface is configured to:
- switch between two predetermined states (E0, E1) at a first frequency (f1) in response to a series of first control signals (SG1) received from the chip card, so as to indicate the start of a phase of acquiring a biometric fingerprint using the biometric fingerprint sensor;
- switch between two predetermined states (E0, E1) at a second frequency (f2) in response to a series of second control signals (SG2) received from the chip card, so as to indicate that a biometric fingerprint is in the process of being acquired; and
- adopt a third predetermined state (E2) in response to a third control signal (SG3) received from the chip card, so as to indicate that the phase of acquiring the biometric fingerprint has ended,
wherein the first and second frequencies are distinct from one another, and the third signal (SG3) is distinct from the first and second control signals (SG1, SG2).

7. System according to any one of Claims 1 to 6, wherein the user interface comprises a first LED and a second LED that are distinct from one another,
the control module being configured to transmit the following to the peripheral device as a control signal:
- a ground voltage so as to turn on only the first LED from among the two LEDs; and
- a voltage with a predetermined high level, greater than ground, so as to turn on only the second LED from among the two LEDs.

8. System according to any one of Claims 1 to 7, wherein the chip card is a card comprising external contacts, compliant with the ISO 7816 standard, for the contact-based transmission of each control signal to the peripheral device.

9. System according to Claim 8, wherein the chip card is configured to transmit each control signal via the C4, C6 or C8 external contact within the meaning of the ISO 7816 standard.

10. System according to Claim 8, wherein the chip card is configured to transmit each control signal via one contact from among the C2, C3 and C7 external contacts within the meaning of the ISO 7816 standard,
wherein the chip card is configured to switch between:
- a first operating mode in which the chip card uses said one contact from among the C2, C3 and C7 external contacts within the meaning of the ISO 7816 standard to carry out ISO 7816-type communication with an external terminal; and
- a second operating mode in which the chip card uses said one contact from among the C2, C3 and C7 external contacts within the meaning of the ISO 7816 standard to transmit each control signal to the peripheral device;
the chip card comprising:
- a checking module configured to check, when the chip card is booted, at least one signal level from among the RST signal detected on the C2 external contact within the meaning of the ISO 7816 standard, the CLK signal detected on the C3 external contact within the meaning of the ISO 7816 standard and the VCC power supply signal detected on the C1 external contact within the meaning of the ISO 7816 standard; and
- a configuration module configured to switch the chip card either into the first operating mode or into the second operating mode depending on said at least one signal level that is detected from among the RST signal, the CLK signal and the VCC signal.

11. System according to any one of Claims 1 to 10, wherein the chip card is a payment card.

12. System according to any one of Claims 1 to 11, wherein the peripheral device is a holder into which the chip card is inserted so as to allow the transmission of said at least one control signal from the control module to the peripheral device.

13. Control method implemented by a system comprising a chip card and a peripheral device cooperating with one another so as to allow the acquisition of a biometric fingerprint, the chip card and the peripheral device being separate from one another, said system comprising at least one internal power source contained within at least one of said chip card or said peripheral device,
the chip card comprising a biometric fingerprint sensor, and the peripheral device, apart from said at least one possible internal power source, comprising only passive components including a user interface, said internal power source being configured to supply electric power to the user interface;
wherein the method comprises:
acquiring a biometric fingerprint using the biometric fingerprint sensor;
transmitting at least one control signal from the chip card to the peripheral device, each control signal being defined by a single level of an electrical characteristic from among a voltage, a current and a frequency; and
configuring the user interface into a predetermined state in response to each received control signal, so as to guide a user in terms of acquiring the biometric fingerprint using the biometric fingerprint sensor, wherein the user interface presents, in each predetermined state, respective information guiding a user in terms of acquiring said biometric fingerprint using the biometric fingerprint sensor.
